# EUROPÄISCHE PATENTANMELDUNG

(11) **EP 2 647 465 A1**
(43) Veröffentlichungstag der Anmeldung: **09.10.2013**
(21) Anmeldenummer: 12162865.5
(22) Anmeldetag: 02.04.2012
(51) Int. Cl.: B23K 26/26, B23K 26/32, B23K 35/00, B23K 35/24, B23K 35/32, B23K 26/20

(54) **Verfahren zum Fügen von Werkstücken aus zinkhaltigen Aluminiumlegierungen durch Laserstrahlschweißen**

(71) Anmelder: Helmholtz-Zentrum Geesthacht Zentrum für Material- und Küstenforschung GmbH, 21502 Geesthacht (DE)
(72) Erfinder: Riekehr, Stefan, 21502 Geesthacht (DE); Iwan, Herman, 22457 Hamburg (DE); Dinse, Rene, 21483 Gülzow (DE); Ventzke, Volker, 22529 Hamburg (DE); Haack, Peter, 21502 Geesthacht (DE)
(74) Vertreter: UEXKÜLL & STOLBERG

(57) **Zusammenfassung**

Die vorliegende Erfindung betrifft ein Verfahren zum Fügen von Werkstücken aus zinkhaltigen Aluminiumlegierungen durch Laserstrahlschweißen, bei dem eine Schicht, die aus Vanadium besteht, in den Fügespalt zwischen den zu verbindenden Werkstücken zur Vermeidung von Porenbildung eingebracht wird, und die Werkstücke anschließend durch Laserstrahlschweißen miteinander verbunden werden.

## Beschreibung

Die vorliegende Erfindung betrifft ein Verfahren zum Fügen von Werkstücken aus zinkhaltigen Aluminiumlegierungen durch Laserstrahlschweißen.

### Beschreibung des Standes der Technik

Ein Verfahren zum Fügen von Werkstücken aus konventionellen Aluminiumlegierungen durch Laserstrahlschweißen ist beispielsweise aus der EP 1 674 190 A1 bekannt.

Beim Laserschweißen wird im Werkstück mit einem Laserstrahl Material geschmolzen und nach dem Erstarren des geschmolzenen Materials bildet sich eine stoffschlüssige Verbindung aus. Der Laserstrahl dringt aufgrund seiner hohen Energiedichte weit in das Werkstück ein. Beim Eindringen in das Werkstück bildet sich eine Dampfkapillare aus verdampfendem Werkstückmaterial aus. Die Dampfkapillare wird als Keyhole bezeichnet, sie wird durch den Dampfdruck des Werkstückmaterials offen gehalten. In diesem Keyhole wird die Laserstrahlung durch Mehrfachreflexion an den Kapillarwänden vollständig absorbiert, eine Leistungserhöhung führt dann in erster Linie zu einem tieferen Keyhole und nicht zu einer breiteren Naht. Dadurch entstehen beim Laserschweißen sehr schlanke Schweißnähte und es sind sehr hohe Schweißgeschwindigkeiten möglich. Das Keyhole ist aufgrund der Wärmeleitung von einem Schmelzbad umgeben, aus welchem sich bei Abkühlung die stoffschlüssige Verbindung bildet.

Laserschweißen kann mit oder ohne Zusatzwerkstoff ausgeführt werden. Der Zusatzwerkstoff dient dann der metallurgischen Beeinflussung der Schmelze, z.B. zur Vermeidung von Erstarrungsrissen, oder der Gestaltung des Nahtprofiles, z.B. um Unterfüllungen aufzufüllen.

Beim Schweißen von zinkhaltigen Aluminiumlegierungen treten auf Grund der spezifischen physikalischen Materialeigenschaften spezielle Probleme auf. Das Zink verdampft beim Laserschweißen nicht nur im Keyhole, sondern auch schon im Schmelzbad. Dies führt zu Poren und damit zu qualitativ minderwertigen Schweißverbindungen. Je höher der Zinkgehalt im Aluminium, desto höher ist die Festigkeit des Werkstoffs, aber die Schweißbarkeit nimmt ab, da auch mehr Zink verdampfen kann und Poren bildet.

Aufgabe der vorliegenden Erfindung ist es ein Verfahren zum Laserstrahlschweißen von zinkhaltigen Aluminiumlegierungen zur Verfügung zu stellen, bei dem keine oder nur sehr wenige Poren gebildet werden.

### Zusammenfassung der Erfindung

Die Aufgabe wird durch ein Verfahren zum Fügen von Werkstücken aus zinkhaltigen Aluminiumlegierungen mittels Laserstrahlschweißen gelöst, das dadurch gekennzeichnet ist, dass zunächst eine Schicht, die aus Vanadium besteht, in den Fügespalt zwischen den zu verbindenden Werkstücken eingebracht wird, und die Werkstücke anschließend durch Laserstrahlschweißen miteinander verbunden werden.

Durch das Einbringen einer Schicht aus Vanadium in den Fügespalt zwischen den zu verbindenden Werkstücken ließ sich der der Porengehalt weitgehend reduzieren. Es wird vermutet, dass Vanadium den Zinkdampf abbindet und somit die Porenbildung verhindert.

### Detaillierte Beschreibung der Erfindung

Vorzugsweise ist die Schicht aus Vanadium eine Vanadiumfolie. Gemäß einer weiteren bevorzugten Ausführungsform ist die Vanadiumschicht eine Pulverbeschichtung, die auf einem der zu verbindenen Werkstücke am Ort des späteren Fügespalts aufgebracht wird. Vorzugsweise hat die Vanadiumschicht bzw. die Vanadiumfolie eine Stärke (Dicke) zwischen 10 und 500 µm, besonders bevorzugt eine Stärke zwischen 20 und 250 µm und insbesondere eine Stärke zwischen 30 und 100 µm, z.B. eine Stärke von 40 µm. Je geringer die Stärke der Folie ist, desto vollständiger ist die Aufschmelzung der Vanadiumfolie.

Die Werkstücke können wie üblich mit und ohne Zusatzdraht miteinander verschweißt werden.

Gemäß einer bevorzugten Ausführungsform werden pro kW Laserleistung 1 mm Werkstückdicke geschweißt. Beispielsweise werden 2 mm dicke Bleche aus Aluminiumlegierungen mit 2,2 kW Laserleistung und 2 m/min bis 3 m/min Vorschubgeschwindigkeit geschweißt. Bevorzugt wird unter einer Schutzgasatmosphäre geschweißt, wobei das Schutzgas beispielsweise Argon und/oder Heliumsein kann. Vorzugsweise beträgt der Fokusdurchmesser des Laserstrahls 100 µm bis 500 µm, bevorzugter 200 µm bis 400 µm, wie etwa 300 µm.

### Beispiel

Es wurden jeweils zwei Werkstücke aus einer PA734-Legierung, einer Aluminiumlegierung mit etwa 8 Gew.% Zink, durch Laserstrahlschweißen miteinander verbunden, wobei jeweils entweder keine oder eine 250 µm starke Vanadiumfolie, eine 125 µm starke Vanadiumfolie bzw. eine 40 µm starke Vanadiumfolie in den Fügespalt zwischen die Werkstücke eingebracht wurde. Bei 2 mm Blechdicke und 300 µm Fokusdurchmesser wurde mit Leistungen zwischen 2,0 und 2,2 kW und Geschwindigkeiten von 2 bis 3,5 m/min gearbeitet. Die Schweißnähte wurden mittels Röntgenaufnahmen untersucht.

Ohne Vanadiumfolie zeigte sich eine starke Porosität der Schweißnähte, während die Verwendung aller Vanadiumfolien zu einer nahezu vollständigen Porenfreiheit führte. Bei den Folien mit Dicke von 125 µm und 250 µm wurde jedoch, im Gegensatz zur Folie mit einer Stärke von 40 µm, eine unvollständige Aufschmelzung der Folie beobachtet.

## Patentansprüche

1. Verfahren zum Fügen von Werkstücken aus zinkhaltigen Aluminiumlegierungen mittels Laserstrahlschweißen, **dadurch gekennzeichnet, dass** zunächst eine Schicht, die aus Vanadium besteht, in den Fügespalt zwischen den zu verbindenden Werkstücken eingebracht wird, und die Werkstücke anschließend durch Laserstrahlschweißen miteinander verbunden werden.

2. Verfahren nach Anspruch 1, **dadurch gekennzeichnet, dass** das die Schicht aus Vanadium eine Vanadiumfolie mit einer Stärke (Dicke) zwischen 10 und 500 µm ist.

3. Verfahren nach Anspruch 2, **dadurch gekennzeichnet, dass** das die Schicht aus Vanadium eine Vanadiumfolie mit einer Stärke (Dicke) zwischen 20 und 250 µm ist.

4. Verfahren nach Anspruch 3, **dadurch gekennzeichnet, dass** das die Schicht Profil aus Vanadium eine Vanadiumfolie mit einer Stärke (Dicke) zwischen 30 und 100 µm ist.

5. Verfahren nach einem der vorgehenden Ansprüche, **dadurch gekennzeichnet, dass** das Laserstrahlschweißen mit Zusatzdraht erfolgt.
